(19) Europäisches Patentamt
European Patent Office
Office européen des brevets

(11) **EP 2 158 445 B1**

(12) **EUROPÄISCHE PATENTSCHRIFT**

(45) Veröffentlichungstag und Bekanntmachung des Hinweises auf die Patenterteilung:
**03.11.2010 Patentblatt 2010/44**

(21) Anmeldenummer: **08773793.8**

(22) Anmeldetag: **01.07.2008**

(51) Int Cl.:
***G01B 11/16*** (2006.01)

(86) Internationale Anmeldenummer:
**PCT/EP2008/005366**

(87) Internationale Veröffentlichungsnummer:
**WO 2009/018881 (12.02.2009 Gazette 2009/07)**

(54) **VERFAHREN ZUR BERÜHRUNGSLOSEN MESSUNG VON VERFORMUNGEN EINER OBERFLÄCHE EINES MESSOBJEKTES**

METHOD FOR THE CONTACT-FREE MEASUREMENT OF DEFORMATIONS OF A SURFACE OF A MEASURED OBJECT

PROCÉDÉ DE MESURE SANS CONTACT DES DÉFORMATIONS D'UNE SURFACE D'UN OBJET MESURÉ

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **09.08.2007 DE 102007037726**

(43) Veröffentlichungstag der Anmeldung:
**03.03.2010 Patentblatt 2010/09**

(73) Patentinhaber: **LaVision GmbH**
**37081 Göttingen (DE)**

(72) Erfinder: **WIENEKE, Bernhard**
**37085 Göttingen (DE)**

(74) Vertreter: **Schneider, Peter Christian**
**Fiedler, Ostermann & Schneider**
**Patentanwälte**
**Obere Karspüle 41**
**37073 Göttingen (DE)**

(56) Entgegenhaltungen:
**DE-A1- 19 614 896    US-A- 5 065 331**
**US-A- 5 726 907**

**Beschreibung**

Die Erfindung betrifft ein Verfahren zur berührungslosen Messung von Verformungen einer Oberfläche eines Messobjektes, wobei mittels eines aus einer Mehrzahl geordneter Pixel aufgebauten Bilddetektors in einem ersten Zeitfenster, in dem das Messobjekt mit einer ersten mechanischen Spannung beaufschlagt ist, wenigstens ein erstes Bild des Messobjektes und in einem zweiten Zeitfenster, in dem das Messobjekt mit einer zweiten mechanischen Spannung beaufschlagt ist, wenigstens ein zweites Bild des Messobjektes aufgenommen wird und die aufgenommenen Bilder zur Erzeugung eines Verformungsfeldes, das Bereichen des Messobjektes spannungsinduzierte Verformungen repräsentierende Verformungsgrößen zuordnet, von einer Datenverarbeitungseinheit miteinander verarbeitet werden.

Derartige Verfahren finden vielfach Einsatz z.B. im Bereich der Materialprüfung. Dabei wird ein zu prüfendes Bauteil, hier als Messobjekt bezeichnet, einer mechanischen Spannung (engl.: stress) ausgesetzt. In zwei unterschiedlichen Zeitfenstern, von denen beispielsweise eines vor und eines nach Anlegen der mechanischen Spannung oder beide zeitlich getrennt während der Beaufschlagung mit der mechanischen Spannung liegen können, werden wenigstens zwei Bilder des Messobjektes aufgenommen. Unter einem Bild wird hier eine geordnete Datenmatrix verstanden, wobei jeder Matrixeintrag dem Messergebnis eines Pixels eines Bilddetektors entspricht. Als Bilddetektoren kommen typischerweise CCD-Kameras, CID-Kameras oder ähnliche Vorrichtungen infrage.

Typischer Weise liefert ein Vergleich der im ersten Zeitfenster und im zweiten Zeitfenster aufgenommenen Bilder für jeden Bereich der Oberfläche des Messobjektes eine durch die angelegte Spannung verursachte Translation, die für unterschiedliche Bereiche unterschiedlich sein kann. Ordnet man jedem dieser Bereiche einen die Translation des jeweiligen Bereichs repräsentierenden Vektor zu, erhält man ein Verschiebungsvektorfeld. Ein solches Verschiebungsvektorfeld dient typischerweise als Grundlage der Berechnung eines differentiellen Dehnungsfeldes, welches die lokale Dehnungsgrößen für jeden Bereich der Messobjektoberfläche repräsentiert. Unter dem Begriff der Dehnung werden hier seine unterschiedlichen Ausprägungen, Streckung, Stauchung, Scherung, Rotation, "Swirl", "Shear" etc. verstanden, für die dem Fachmann mathematisch formulierte Definitionen bekannt sind. Da sich die Dehnungsgrößen mathematisch aus der räumlichen Ableitung der Verschiebung jedes Oberflächenpunktes ergeben, wird das differentielle Dehnungsfeld typischerweise aus den Differenzvektoren benachbarter Verschiebungsvektoren des Verschiebungsvektorfeldes ermittelt. Es existieren jedoch auch Verfahren, bei denen ein Dehnungsfeld unmittelbar, d.h. ohne den Umweg über die Berechnung eines Verschiebungsvektorfeldes, aus den in den Zeitfenstern aufgenommenen Bildern berechnet werden kann. Um beide Verfahrensvarianten abzudecken, wird hier allgemein von einem aus Verformungsgrößen aufgebauten Verformungsfeld gesprochen, wobei als Verformungsgrößen je nach Anwendungsfall die Verschiebungsgrößen, insbesondere Verschiebungsvektoren, oder die Dehnungsgrößen bezeichnet sind. Je nach Mess- bzw. Berechnungsverfahren kann es sich bei den Verformungsgrößen um Skalare, Vektoren oder Tensoren höherer Ordnung handeln.

Zur Ermittlung des Verschiebungsvektorfeldes sind mehrere Verfahren bekannt. Besonders günstig ist das sogenannte Kreuzkorrelationsverfahren. Hierzu wird ein im ersten Zeitfenster aufgenommenes Bild in eine Anzahl von Bildzellen unterteilt. Die Bildzellen können beispielsweise als ein gleichmäßiges, über die Bildgeometrie verteiltes Gitter erzeugt werden. Man beachte, dass sich die Bildzellen allein an der Bildgeometrie und nicht an dem Dateninhalt des Bildes orientieren. Dieselbe Bildzelleneinteilung wird für ein im zweiten Zeitfenster aufgenommenes Bild vorgenommen. Im Anschluss werden die jeweils korrespondierenden Bildzellen beider Bilder durch eine zweidimensionale Kreuzkorrelation, vorzugsweise entlang der als x und y bezeichneten Gitterachsen verknüpft. Der Maximalwert einer solchen Kreuzkorrelationsfunktion liefert den Verschiebungsvektor für die Bildzelle und somit für den von der Bildzelle des ersten Bildes repräsentierten Bereich der Messobjektoberfläche.

Die Kreuzkorrelation erlaubt eine subpixelgenaue Bestimmung der Verschiebungsvektoren. Bei Wahl der Zellengröße von z.B. 20 x 20 Pixel ist mit bekannten Methoden eine Genauigkeit des Verschiebungsvektors von 0,01 bis 0,05 Pixel realisierbar. Durch Vergrößerung der Zellen lässt sich eine weitere Genauigkeitsverbesserung erreichen. Hierdurch vergrößert sich jedoch der Abstand zwischen den einzelnen Vektoren des Verschiebungsvektorfeldes, sodass im Einzelfall eine Abwägung zwischen der Genauigkeit der Einzelvektoren und der Auflösung des Vektorfeldes getroffen werden muss. In vielen Fällen ist jedoch die Verbesserung der Bestimmungsgenauigkeit der Verschiebungsvektoren unter Beibehaltung einer hohen Auflösung des Vektorfeldes wünschenswert. Hier stoßen bekannte Verfahren an ihre Grenzen.

Analoges gilt auch für Fälle, in denen eine andere Art der Verarbeitung der Einzel-Bilder zu einem Verformungsfeld gewählt wird, beispielsweise für Verfahren, die direkt zu einem Dehnungsfeld führen.

Zur Qualitätsverbesserung einzelner Bilder sind aus dem Bereich der digitalen Fotografie unterschiedliche Verfahren bekannt. Im einfachsten Fall können mehrere Bilder desselben Objektes aufgenommen und miteinander gemittelt werden. Hierdurch kann insbesondere das Detektorrauschen reduziert werden.

Eine echte Auflösungsverbesserung kann durch ein gezieltes "Verwackeln" erreicht werden. Hierzu werden eine Mehrzahl von Einzel-Bildern aufgenommen, wobei zwischen den einzelnen Aufnahmen der Detektor relativ zum Messobjekt geringfügig versetzt wird. Die Versetzung erfolgt vorzugsweise um einen Versatz der Größenordnung eines Bruchteils eines Pixels bis hin zu wenigen Pixeln, wobei jedoch eine Versetzung um ein ganzzeiliges Vielfaches eines Pixels nicht zielführend ist. Die Versetzung des Detektors erfolgt senkrecht zur optischen Achse, d.h. parallel zur Detektorfläche. Dies ist im Rahmen der vorliegenden Anmeldung so zu verstehen, dass die Versetzung wenigstens eine Komponente parallel zur Detektorfläche aufweisen muss; eine (zusätzliche) geringfügige Versetzung parallel zur optischen Achse ist unschädlich. Aus der aufgenommenen Bildserie und der Information über die Versetzung lässt sich dann mit bekannten Entfaltungsmethoden ein Ergebnisbild mit Subpixelauflösung berechnen. Da der Entfaltungsalgorithmus jedoch empfindlich gegenüber Rauschen ist, kann man mit diesem Verfahren meist nur eine Auflösungsverbesserung um einen Faktor 2 bis 4 erzielen.

Das oben geschilderte Verfahren zur Ermittlung eines Verschiebungsvektorfeldes würde daher von der Anwendung des gezielten "Verwackelns" auf die miteinander zu verarbeitenden Bilder des ersten und des zweiten zeitfensters nur geringfügig profitieren.

Aus der US 5,726,907 A ist ein Verfahren zur Messung eines Verformungsfeldes bekannt, bei dem eine Probe in einem Referenzzustand und in einem spannungsinduzierten Verformungszustand mit einem Bilddetektor aufgenommen wird. In beiden Bildern wird mittels Kreuzkorrelation Testpunkte identifiziert und die Abstände der Testpunkte zu einem Referenzpunkt bestimmt. Vergleich der Abstände im Referenzbild mit denjenigen in dem Bild der verformten Probe liefert das Verformungsbild, insbesondere das Verschiebungsvektorfeld.

Ein ähnliches Verfahren ist aus der DE 196 14 896 A1 bekannt. Auch hier werden Verschiebungsvektoren durch direkten Vergleich zweier in unterschiedlichen Spannungszuständen aufgenommener Bilder bestimmt.

Aus der US 5,065,331 ist ein Verfahren bekannt, bei dem ein Messobjekt mit einem Laser-Specklemuster belegt wird. Anschließend werden zwei Bilder des Messobjektes in zwei verschiedenen Verformungszuständen aufgenommen. Die Veränderung des Specklemusters wird durch Korrelationsverfahren ermittelt. Aus der Veränderung des Specklemusters wird auf Verformung des Messobjektes geschlossen.

Keines der drei letztgenannten Verfahren enthält gegenüber den zuvor beschriebenen Verfahren einen Ansatz zur Verbesserung der Genauigkeit der Ermittlung von Verformungsgrößen.

Es ist die Aufgabe der vorliegenden Erfindung, ein gattungsgemäßes Verfahren derart zu verbessern, dass die Genauigkeit, mit der die Verformungsgrößen ermittelt werden, unter Beibehaltung der Auflösung des Verformungsfeldes gesteigert wird.

Diese Aufgabe wird in Verbindung mit den Merkmalen des Oberbegriffs von Anspruch 1 dadurch gelöst, dass

- in jedem der Zeitfenster in zeitlicher Folge eine Mehrzahl von Einzel-Bildern aufgenommen werden, wobei zwischen je zwei Einzel-Bildaufnahmen der Bilddetektor relativ zum Messobjekt und parallel zu seiner Detektorfläche um einen optischen Versatz der Größe eines Bruchteils eines Pixels bis zu wenigen Pixeln versetzt wird,
- die Einzel-Bilder des ersten Zeitfensters paarweise mit den Einzel-Bildern des zweiten Zeitfensters zur Erzeugung eines Satzes von Einzel-Verformungsfeldern verarbeitet werden und
- als Ergebnis-Verformungsfeld eine Mittelung der Einzel-Verformungsfelder berechnet wird.

Anstatt also durch gezieltes "Verwackeln" und anschließende Entfaltung auflösungsverbesserte Bilder aus dem ersten Zeitfenster und dem zweiten Zeitfenster miteinander z.B. durch Kreuzkorrelation zu verarbeiten, wird erfindungsgemäß vorgeschlagen, wie auch beim gezielten "Verwackeln" in jedem Zeitfenster mehrere Einzel-Bilder aufzunehmen, diese jedoch direkt und paarweise miteinander zu verarbeiten. Hieraus resultiert eine Vielzahl von Einzel-Verformungsfeldern, die anschließend zur Bestimmung des Ergebnis-Verformungsfeldes miteinander gemittelt werden. Eine separate Entfaltung entfällt somit. Dabei ist zu beachten, dass der Begriff der "Mittelung" hier weit zu verstehen ist und neben dem arithmetischen Mittel auch komplexere Formen der Mittelung, z.B. eine Regression umfasst.

Dieser Ansatz erscheint zunächst überraschend, da weder die mit dem "Verwackeln" verbundene Faltung der Daten noch die typischerweise zur Verarbeitung der Paare von Einzel-Bildern verwendete Kreuzkorrelation lineare Funktionen sind, die eine Qualitätsverbesserung durch Mittelung erwarten lassen würden. Gleichwohl hat sich gezeigt, dass mit dem erfindungsgemäßen Verfahren eine Genauigkeitsverbesserung der Bestimmung der Verformungsgrößen des Ergebnis-Verformungsfeldes um einen Faktor 10 bei beibehaltener Bildzellengröße, d.h. Auflösung des Ergebnis-Verformungsfeldes, möglich ist. In Bezug auf das weiter oben erwähnte Beispiel einer Bildzellenwahl von 20 x 20 Pixel bedeutet dies, dass beispielsweise Verschiebungsvektoren mit eine Genauigkeit von bis zu 0,001 Pixel bestimmt werden können, wobei in der Regel nur die hieraus abgeleiteten differentiellen Dehnungsgrößen von Interesse sind, die jedoch ebenfalls mit deutlich verbesserter Genauigkeit berechenbar sind. Dies stellt eine wesentliche Qualitätsverbesserung gegenüber dem bekannten Verfahren dar.

Bevorzugt ist das Verformungsfeld ein Verschiebungsvektorfeld, welches den Bereichen des Messobjektes spannungsinduziert Translationen zuordnet. Günstiger Weise erfolgt, wie erwähnt, die paarweise Verarbeitung der Einzel-Bilder des ersten und des zweiten Zeitfensters als eine bildzellenweise, zweidimensionale Kreuzkorrelation der jeweiligen Bilddaten. Das erfindungsgemäße Verfahren ist jedoch nicht auf die Kreuzkorrelation als Verarbeitungsmethode der Einzel-Bilder beschränkt.

Ein erfindungsgemäß ermitteltes Verschiebungsvektor kann, wie grundsätzlich aus dem Stand der Technik bekannt, als Grundlage der Erzeugung eines Dehnungsfeldes dienen, welches den Bereichen des Messobjektes spannungsinduzierte Dehnungen dieser Bereiche repräsentierende Dehnungsgrößen zuordnet. Hierzu werden Differenzen benachbarter Verschiebungsgrößen und/oder aus solchen Differenzen abgeleitete Größen berechnet. Insbesondere können aus den Differenzen einzelner Vektorkomponenten zu den entsprechenden Vektorkomponenten verschiedener Nachbarvektoren Dehnungstensoren ermittelt werden, aus deren Komponenten skalare Dehnungsgrößen berechnet werden können. Im kontinuierlichen Fall könnten die Tensorkomponenten

$$\varepsilon_{xx} = \partial\Delta x \Big/ \partial x , \varepsilon_{xy} = \partial\Delta x \Big/ \partial y , \varepsilon_{yx} = \partial\Delta y \Big/ \partial x , \varepsilon_{yy} = \partial\Delta y \Big/ \partial y$$ lauten, wobei $\Delta x$ bzw. $\Delta y$ eine Differenz der x- bzw.

einer y-Komponente des Verschiebungsvektors und $\partial \big/ \partial x$ bzw. $\partial \big/ \partial y$ die partielle Ableitung in x- bzw. y-Richtung bedeutet. Die in der Regel hauptsächlich interessierenden Dehnungsgrößen ("strain") der eigentlichen Dehnung und der Scherung sind definiert als $\varepsilon_{xx}+\varepsilon_{yy}$ bzw. $\frac{1}{2}(\varepsilon_{xy}+\varepsilon_{yx})$. Im hier vorliegenden diskreten (weil digitalen) Fall können anstelle der Differentiale entsprechende Differenzen bzw. Differenzquotienten verwendet werden.

Alternativ zur Berechnung der in der Regel interessierenden Dehnungsfeldes durch zwischenzeitlich Ermittlung des Verschiebungsvektorfeldes kann bei einer anderen Ausführungsform vorgesehen sein, dass das Verformungsfeld ein Dehnungsfeld ist, welches den Bereichen des Messobjektes spannungsinduzierte Dehnungen dieser Bereiche repräsentierende Dehnungsgrößen zuordnet. Mit anderen Worten kann die paarweise Verarbeitung der Bilder aus den beiden Zeitfenstern auch direkt zu einem Dehnungsfeld führen, oft mit einer gleichzeitigen Berechnung des Verschiebungsvektorfeldes.

Wie für den Fachmann offensichtlich sein sollte, ist es erforderlich, dass die zwischen den Aufnahmen der Einzel-Bilder erfolgende Versetzung des Bilddetektors relativ zu dem Messobjekt optischer Natur ist, d.h. sie muss sich auf einen Versatz des auf den Bilddetektor projizierten Bildes des Messobjektes relativ zu der Detektorfläche beziehen. Dies kann z.B. durch eine mechanische Versetzung des Bilddetektors selbst, beispielsweise mittels elektromechanischer und/oder piezoelektrischer Aktuatoren erfolgen. Alternativ ist es jedoch auch möglich, die optische Versetzung durch Variation eines optischen Mediums zwischen dem Detektor und dem Messobjekt zu erzeugen.

Vorzugsweise ist dabei vorgesehen, dass die optischen Versetzungen des Bilddetektors zwischen den Aufnahmen der Einzel-Bilder eines Zeitfensters modulo einer Pixelausdehnung gleichverteilt über eine Pixelfläche erfolgt. Mit anderen Worten bedeutet dies, dass die Versetzungen, die vorzugsweise, aber nicht zwingend jeweils kleiner als die Ausdehnung eines Pixel in Versetzungsrichtung sind, in der zusammenschau möglichst gleichmäßig verteilt sind. Insbesondere würde eine einkomponentige Schwingung des Bilddetektors zu einer unerwünschten Häufung der erzielten Versätze auf einer in Schwingungsrichtung ausgerichteten Linie führen. "gleichverteilt" ist hier im statistischen Sinn zu verstehen und bedeutet innerhalb der Standardabweichung gleichmäßig verteilt. Wie bereits erwähnt, kommt es bei dem Betrag des Versatzes lediglich auf den ein ganzzahliges Vielfaches - einschließlich Null - übersteigenden Bruchteil einer Pixelausdehnung an. Dies wird mathematisch mit der Formulierung "modulo" zum Ausdruck gebracht werden.

Ein großer Vorteil des erfindungsgemäßen Verfahrens gegenüber solchen "Verwacklungs"-Verfahren, die einen Entfaltungsschritt benötigen, ist, dass keine genaue Information über die tatsächlich erfolgten optischen Versetzungen des Detektors zwischen den Aufnahmen der Einzel-Bilder erforderlich ist. Dass diese Information nicht benötigt wird, zeigt den weiteren Vorteil, dass die optische Versetzung beliebiger, insbesondere zufälliger oder pseudozufälliger Natur sein kann. So könnten beispielsweise Aktuatoren, die den Bilddetektor mechanisch versetzten, zufällig angesteuert werden oder es könnte im Fall einer optischen Versetzung durch Variation des optischen Mediums zwischen dem Detektor und dem Messobjekt z.B. eine rotierende Keilscheibe oder eine ähnlich einfache Vorrichtung verwendet werden. In dieser Hinsicht ist es von Vorteil, dass häufig vorkommende Vibrationen des Messobjektes oder des Messaufbaus für die Genauigkeit des Verfahrens nicht schädlich sind, wie es z.B. für anderen Dehnungsmessverfahren, basierend auf interferometrischen Methoden, der Fall ist.

Günstigerweise ist das Messobjekt während jedes Zeitfensters statisch. Für einen optimalen Messverlauf bedeutet dies, dass das Messobjekt während des ersten Zeitfensters mit einer ersten mechanischen Spannung beaufschlagt ist, die zu keiner dynamischen Änderung des Messobjektes, z.B. durch Fließen des Materials, führt. Diese erste mechanische Spannung kann beispielsweise Null sein. Das zweite Zeitfenster wird günstigerweise so positioniert, dass sich das Messobjekt ebenfalls in einem statischen, jedoch mit einer von der ersten mechanischen Spannung verschiedenen, zweiten mechanischen Spannung beaufschlagt ist. Derart vorteilhafte Voraussetzungen sind jedoch nicht in jedem Fall realisierbar. Beispielsweise ist es möglich, dass eine der angelegten mechanischen Spannungen, insbesondere die zweite mechanische Spannung, während des zweiten Zeitfensters so groß ist, dass sich das Messobjekt während des Zeitfensters dynamisch verändert. Weiter ist es möglich, dass sich das Messobjekt während beider Zeitfenster dynamisch verändert, wobei beispielsweise während beider Zeitfenster dieselbe, eine Fließgrenze des Messobjekt-Materials übersteigende mechanische Spannung angelegt ist. Mit anderen Worten bedeutet dies, dass die erste und zweite mechanische Spannung gleich sein können und sich das Messobjekt unter der angelegten Spannung kontinuierlich verformt.

In all diesen Situationen kann es günstig sein, eine Kompensation dieser globalen Verschiebung oder Verformung des Messobjektes während eines oder beider Zeitfenster zu ermitteln, um eine entsprechende Korrektur des Verschiebungsvektorfeldes zur erreichen. Hierzu wird bei einer günstigen Weiterbildung der Erfindung vorgeschlagen, dass zur Ermittlung des Ergebnis-Verformungsfeldes aus den Einzel-Verformungsfeldern eine Regression durch ein Histogramm ermittelt wird, welches die einem Bereich des Messobjektes zugeordneten Verformungsgrößen der Einzel-Verformungsfelder über der Zeit der Aufnahme der Einzel-Bilder eines Zeitfensters repräsentiert. Anschaulich gesprochen bedeutet dies, dass die durch jeweils paarweise Verarbeitung, insbesondere Kreuzkorrelation, zweier Einzel-Bilder unterschiedlicher Zeitfenster ermittelten Einzel-Verschiebungsvektorfelder bildzellenweise in einem Histogramm geordnet werden, welches die Größe (und ggf. die Richtung) jedes Verschiebungsvektors der Einzel-Verschiebungsvektorfelder über der Zeit der Aufnahme der dem kompensationsbedürftigen Zeitfenster zugehörigen Einzel-Bilder aufträgt. Werden beispielsweise 10 Einzel-Bilder des ersten Zeitfensters bei konstanter Dehnung mit 10 Einzel-Bildern des zweiten Zeitfensters mit sich ändernder Dehnung korreliert, ergeben sich 100 Einzel-Verschiebungsvektorfelder. Für jede Bildzelle kann dann ein Histogramm erstellt werden, auf dessen x-Achse z.B. die Aufnahmezeiten der Einzel-Bilder des zweiten Zeitfensters aufgetragen sind, d.h. die Achse ist in 10 Abschnitte unterteilt. In jedem dieser 10 Abschnitte repräsentierten 10 Histogrammpunkte die auf der y-Achse aufgetragenen Größen der Einzel-Verschiebungsvektoren, die sich aus den Korrelationen mit den 10 Einzel-Bildern des ersten Zeitfensters ergeben. Legt man durch dieses Histogramm eine (im einfachsten Fall lineare) Regression, repräsentiert diese die globale Verschiebung oder Verformung des Messobjektes während des zweiten Zeitfensters. Die Regression an sich wird hier als Mittelung angesehen und ein die Regression repräsentierender Wert, z.B. der Wert der Regressionskurve zu einem mittleren Zeitpunkt des Zeitfensters T2, kann als Ergebnis-Größe für die betroffene Bildzelle verwendet werden.

Obgleich die Erfindung oben aus Gründen der Anschaulichkeit im Wesentlichen für den rein zweidimensionalen Fall beschrieben wurde, ist das erfindungsgemäße Verfahren nicht auf diesen beschränkt. Vielmehr ist es möglich, die entsprechenden Werte bzw. Vektorfelder auch auf dreidimensional erstreckten Flächen zu berechnen. Hierzu werden wenigstens zwei räumlich zueinander versetzte Bilddetektoren verwendet, deren Ausgangsdaten in für den Fachmann im Lichte der obigen Erläuterungen offensichtlicher Weise kombiniert werden.

Weitere Merkmale der Erfindung ergeben sich aus der nachfolgenden, speziellen Beschreibung und den Zeichnungen.

Es zeigen:

Figur 1: eine schematische Darstellung mehrerer, relativ zueinander versetzter Einzel-Bildern,

Figur 2: eine schematische Darstellung eines Ausschnittes zweier Einzel-Bilder von Figur 1 zur Demonstration der bevorzugten Versatzgröße,

Figur 3: eine schematische Darstellung der in zwei Zeitfenstern aufgenommenen Einzel-Bilder im Verhältnis zu der Verformung des Messobjektes,

Figur 4: eine schematische Darstellung der Berechnung eines Einzel-Verschiebungsvektorfeldes aus zwei Einzel-Bildern,

Figur 5: eine schematische Darstellung der erfindungsgemäßen Erzeugung eines Ergebnis- Verschiebungsvektorfeldes,

Figur 6: die Darstellung von Figur 3 mit einem anderen Verlauf der Verformung des Messobjektes, und

Figur 7: eine schematische Darstellung eines Kompensationsberechnungsverfahrens, insbesondere zur Verwendung bei der in Figur 6 dargestellten Messsituation.

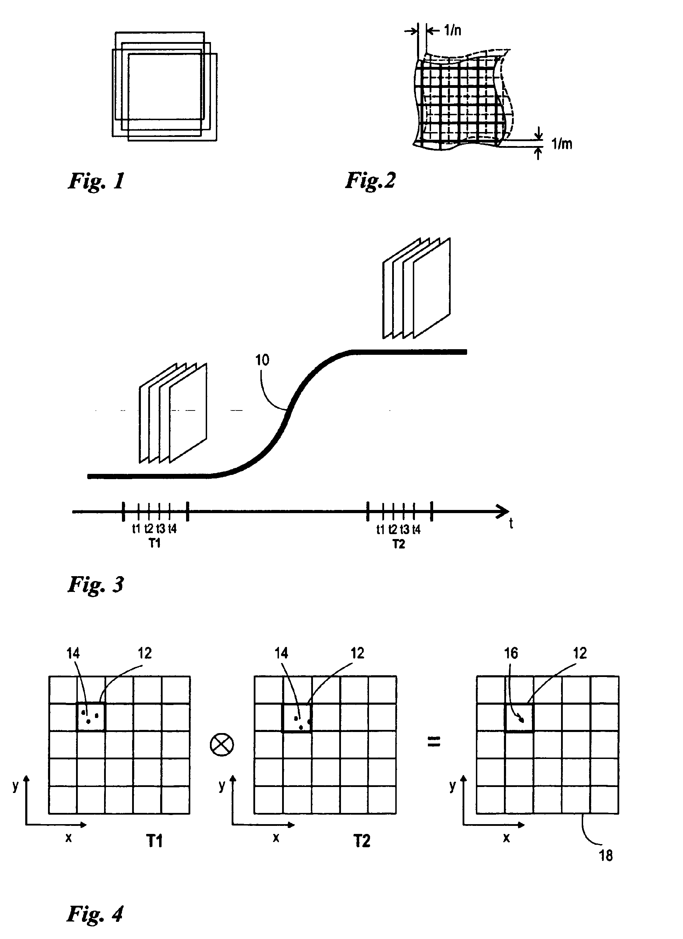

Wie im allgemeinen Teil der Beschreibung bereits ausführlich erläutert, ist es ein wesentliches Merkmal der Erfindung, dass die während jedes Zeitfensters aufgenommenen Einzel-Bilder relativ zueinander optisch versetzt sind. Figur 1 zeigt schematisch, vier derartig gegeneinander versetzten Einzel-Bilder. Dabei kann, wie in Figur 1 dargestellt, der Detektor, z.B. eine CCD-Kamera bzw. deren Chip, durch ansteuerbare Aktuatoren zwischen den Einzelaufnahmen versetzt werden. Andererseits ist es auch möglich, zur optischen Versetzung, Variationen eines optischen Mediums zur Versetzung der Abbildung des Messobjektes auf den Detektor zu nutzen.

Figur 2 zeigt schematisch die bevorzugte Größenordnung des Versatzes. Dieser beträgt günstigerweise nur einen Bruchteil eines Detektorpixels, z.B. 1/2, 1/3, 1/4 ... Auch die Versetzung um mehr als einen Pixel ist grundsätzlich möglich, sollte jedoch einige wenige Pixel vorzugsweise nicht überschreiten. Ein Versatz um ein ganzzeiliges Vielfaches eines Pixels ist grundsätzlich unschädlich, trägt jedoch nicht zur Auflösungsverbesserung bei. In der Zusammenschau sollten die Versätze eines Zeitfenster (jeweils modulo einer Pixelausdehnung) über eine Pixelfläche gleichverteilt sein.

Figur 3 zeigt schematisch den typischen Ablauf einer Messung entsprechend dem erfindungsgemäßen Verfahren. Die Kurve 10 zeigt schematisch den Verlauf einer globalen Verformung des Messobjektes aufgrund einer angelegten mechanischen Spannung. In dem in Figur 3 dargestellten, besonders günstigen Fall geht das Messobjekt durch die Beaufschlagung mit der mechanischen Spannung von einem ersten statischen Zustand in einen zweiten statischen Zustand über. Während dieser statischen Zustände sind Zeitfenster T1 und T2 definiert, während derer jeweils eine Mehrzahl von Einzel-Bildern mit der oben erläuterten optischen Versetzung zueinander aufgenommen werden. Bei der in Figur 3 dargestellten Ausführungsform werden in jedem Zeitfenster zu den Zeiten t1, t2, t3 und t4 jeweils ein Einzel-Bilder aufgenommen, sodass aus jedem Zeitfenster jeweils 4 Einzel-Bilder resultieren.

Figur 4 verdeutlicht schematisch die Erzeugung eines Verschiebungsvektorfeldes aus zwei Bildern, die aus unterschiedlichen Zeitfenstern stammen. In Figur 4 sind die Bilder mit dem Kürzel des entsprechenden Zeitfensters T1 bzw. T2 gekennzeichnet. Jedes Bild wird in eine Vielzahl von Bildzellen 12 unterteilt, die sich jeweils an der Geometrie des Bildes und nicht an der in dem Bild erfassten Bildinformation orientieren. Eine typische Unterteilung in Bildzellen ist die Unterteilung des gesamten Bildes in aneinander angrenzende Blöcke von jeweils z.B. 20 x 20 Pixel. Als Bildinformation ist in Figur 4 in der markierten Bildzelle 12 ein Muster 14, bestehend aus drei Punkten eingezeichnet. Diese Punkte repräsentieren Oberflächenpunkte des Messobjektes. An dieser Stelle sei darauf hingewiesen, dass es zwar möglich, aber nicht zwingend erforderlich ist, die Oberfläche des Messobjektes mit einem definierten Muster von Markierungspunkten zu überziehen. Insbesondere bei Verwendung des Kreuzkorrelationsverfahrens sind häufig Kontrastunterschiede, die sich aus der natürlichen Oberflächenstruktur des Messobjektes ergeben, hinreichend.

Zellenweiser Vergleich der Bilder T1 und T2 miteinander, insbesondere durch eine zweidimensionale, räumliche Kreuzkorrelation der Bildachsen, die in Figur 4 mit x und y bezeichnet sind, ergibt für jede Bildzelle 12 einen lokalen Verschiebungsvektor 16. Die Darstellung aller Verschiebungsvektoren 16 in den ihnen zugeordneten Bildzellen 12, liefert das gesuchte Verschiebungsvektorfeld 18. Zur Visualisierung kann das Vektorfeld 18 Abbildung des Messobjektes überlagert werden. Auch eine Falschfarbendarstellung des Messobjektes in Abhängigkeit von den Beträgen der Verschiebungsvektoren 16 ist eine übliche Visualisierungsmaßnahme.

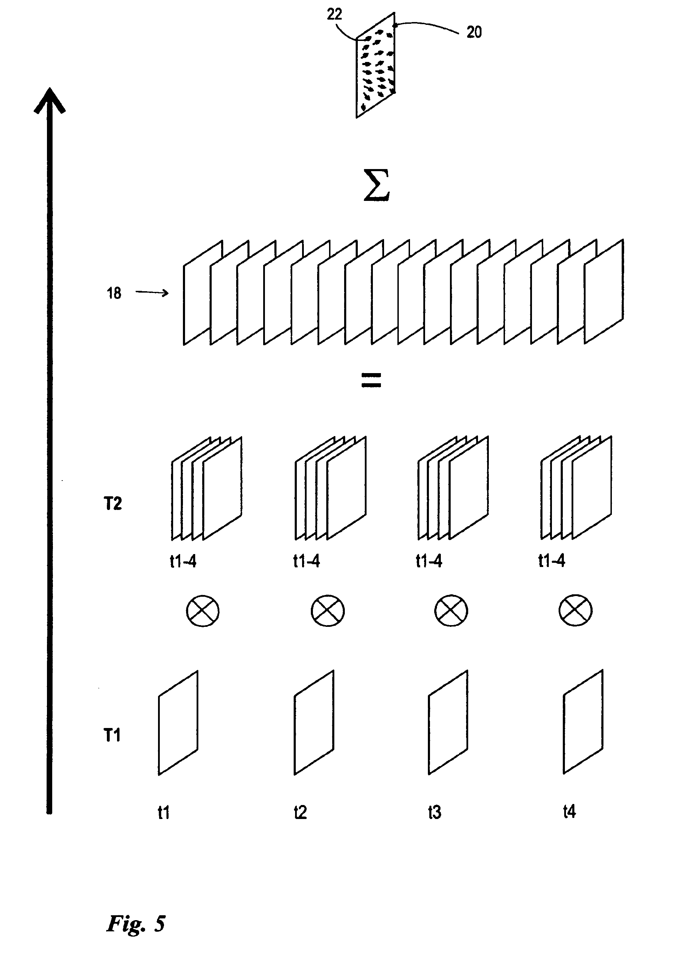

Das in Figur 4 dargestellte Kreuzkorrelationsverfahren ist grundsätzlich im Stand der Technik bekannt. Figur 5 zeigt schematisch die erfindungsgemäße Verbesserung des bekannten Verfahrens. Hierzu wird jedes im Zeitfenster T1 aufgenommene Bild t1, t2, t3 und t4 mit jedem der im Zeitfenster T2 aufgenommenen Bild tl-4 verknüpft, insbesondere kreuzkorreliert, woraus eine Vielzahl von Einzel-Verschiebungsvektorfeldern 18 resultieren. Da Figur 5 unter Rückgriff auf Figur 3 davon ausgeht, dass in jedem Zeitfenster T1, T2 je 4 Einzel-Bilder aufgenommen wurden, ergeben sich bei dem dargestellten Beispiel 16 Einzel-Verschiebungsvektorfelder 18. Eine Mittelung dieser Einzel-Vektorfelder 18 liefert ein Ergebnis-Verschiebungsvektorfeld 20, welches eine deutlich verbesserte Genauigkeit der lokalen Verschiebungsvektoren 22 bei beibehaltender Bildzellengröße aufweist.

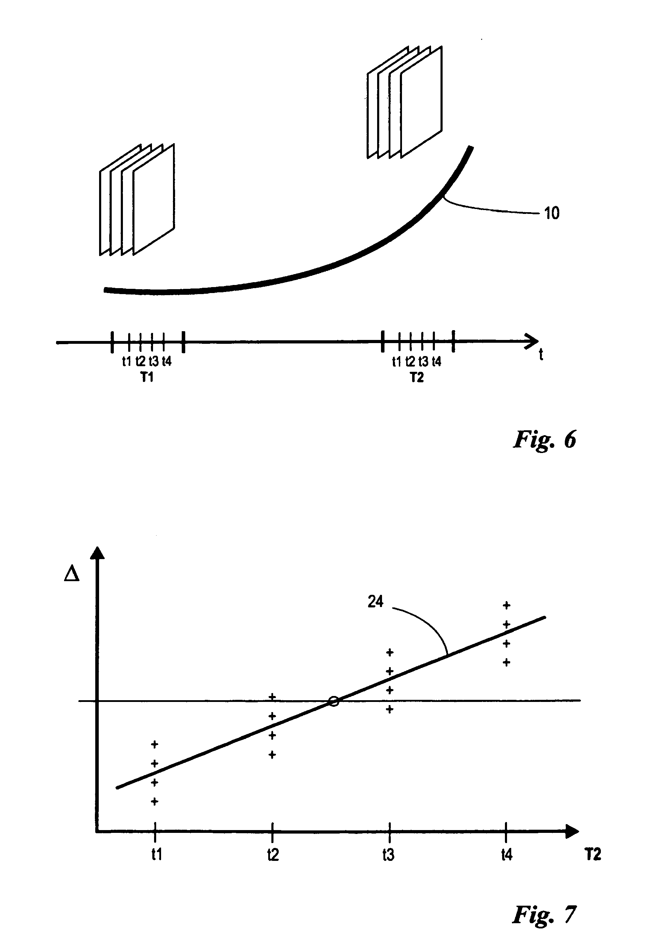

Figur 6 zeigt in der gleichen Darstellung wie Figur 3 den Fall, dass sich das Messobjekt wenigstens im zweiten Zeitfenster T2 nicht in einem stationären Zustand befindet. Dies bedeutet, dass der gewollt eingebrachten Versetzung der Einzel-Bilder zueinander eine globale Verformung oder Verschiebung überlagert ist. Um diese globale Verformung oder Verschiebung zu kompensieren, wird der Berechnung des Ergebnis-Verschiebungsvektorfeldes eine Korrektur der Einzel-Verschiebungsvektorfelder vorgeschaltet oder die herkömmliche Mittelung (z.B. Bildung eines arithmetischen Mittels) durch eine komplexere Art der Mittelung, wie etwa der Regression ersetzt.

Ein besonders vorteilhaftes Verfahren zur Ermittlung einer geeigneten Korrekturgröße ist in Figur 7 dargestellt. Hierzu wird für jede Bildzelle 12 ein Histogramm erzeugt, wie in Figur 7 dargestellt. Die Einträge des Histogramms entsprechen den Einzel-Verschiebungsvektoren 16 der entsprechenden Bildzelle 12 aus sämtlichen Einzel-Verschiebungsvektorfeldern 18. Auf der Abszisse des Histogramms sind die Zeitpunkte während des zweiten Zeitfensters T2 aufgetragen, zu denen die Einzel-Bilder t1, t2, t3 und t4 aufgenommen wurden. Die Ordinate gibt den Betrag des jeweiligen lokalen Verschiebungsvektors 16 an. Man beachte, dass in Figur 7 aus Gründen der Anschaulichkeit auf eine Darstellung der Richtung der lokalen Verschiebungsvektoren 16 verzichtet wurde. Tatsächlich lassen sich sämtliche in den lokalen Verschiebungsvektoren 16 enthaltene Informationen in einem mehrdimensionalen Histogramm darstellen. Im vorliegenden Fall sind die Histogrammeinträge in 4 Clustern dargestellt. Ob sich tatsächlich eine Clusterbildung oder eine andere Verteilung einstellt, hängt im konkreten Anwendungsfall u.a. davon ab, ob sich das Messobjekt in nur einem oder in beiden Zeitfenstern in einem nicht-stationären Zustand befindet sowie von der Relation der optischen Versetzung der Einzel-Bilder zu der Größenordnung der zu kompensierenden, globalen Verschiebung oder Verformung. Eine Regression 24 durch das Histogramm, die im vorliegenden Fall als lineare Regression dargestellt ist, kann als Grundlage der Berechnung einer gemittelten Größe oder als Kompensationsgröße dienen. Insbesondere kann es sinnvoll sein, wie bei dem dargestellten Ausführungsbeispiel, als gemittelte Größe denjenigen Punkt auf der Regressionsgeraden 24 zu wählen, der in etwa der Mitte des Zeitfensters T1 entspricht.

Das erfindungsgemäß erzeugte Ergebnis-Verschiebungsvektorfeld kann als Grundlage der Berechnung weiterer Größen dienen, insbesondere kann ein differenzielles Dehnungsfeld aus den Differenzvektoren benachbarter Verschiebungsvektoren im Ergebnis-Verschiebungsvektorfeld ermittelt werden.

Natürlich stellen die in der speziellen Beschreibung erläuterten und in den Figuren veranschaulichten Ausführungsformen nur illustrative Ausführungsbeispiele der vorliegenden Erfindung dar. Dem Fachmann ist im Lichte der hiesigen Offenbarung ein breites Variationsspektrum anhand gegeben. Insbesondere ist die Erfindung nicht auf die Anwendung der Kreuzkorrelation zur paarweisen Verarbeitung von Einzel-Bildern zwecks Erzeugung der Einzel-Verschiebungsvektorfelder beschränkt. Insbesondere in Fällen, in denen die Oberfläche des Messobjektes mit einem klar definierten Muster belegt ist, können auch andere dem Fachmann bekannte Verfahren herangezogen werden. Die Verallgemeinerung des erfindungsgemäßen Verfahrens auf die Darstellung dreidimensional erstreckter Flächen unter Verwendung von wenigstens zwei Bilddetektoren ist für den Fachmann auf Basis des hier vorliegend geschilderten zweidimensionalen Falles offensichtlich.

**Patentansprüche**

1. Verfahren zur berührungslosen Messung von Verformungen einer Oberfläche eines Messobjektes, wobei mittels eines aus einer Mehrzahl geordneter Pixel aufgebauten Bilddetektors in einem ersten Zeitfenster (T1), in dem das Messobjekt mit einer ersten mechanischen Spannung beaufschlagt ist, wenigstens ein erstes Bild des Messobjektes und in einem zweiten Zeitfenster (T2), in dem das Messobjekt mit einer zweiten mechanischen Spannung beaufschlagt ist, wenigstens ein zweites Bild des Messobjektes aufgenommen wird und die aufgenommenen Bilder zur Erzeugung eines Verformungsfeldes (18; 20), das Bereichen des Messobjektes spannungsinduzierte Verformungen repräsentierende Verformungsgrößen zuordnet, von einer Datenverarbeitungseinheit miteinander verarbeitet werden,
**dadurch gekennzeichnet, dass**

- in jedem der Zeitfenster (T1; T2) in zeitlicher Folge eine Mehrzahl von Einzel-Bildern aufgenommen werden, wobei zwischen je zwei Einzel-Bildaufnahmen der Bilddetektor relativ zum Messobjekt und parallel zu seiner Detektorfläche um einen optischen Versatz der Größe eines Bruchteils eines Pixels bis zu wenigen Pixeln versetzt wird,
- die Einzel-Bilder des ersten Zeitfensters (T1) paarweise mit den Einzel-Bildern des zweiten Zeitfensters (T2) zur Erzeugung eines Satzes von Einzel-Verformungsfeldern (18) verarbeitet werden und
- als Ergebnis-Verformungsfeld (20) eine Mittelung der Einzel-Verformungsfelder (18) berechnet wird.

2. Verfahren nach Anspruch 1,
**dadurch gekennzeichnet,**
**dass** das Verformungsfeld ein Verschiebungsvektorfeld ist, welches den Bereichen des Messobjektes spannungsinduzierte Translationen dieser Bereiche repräsentierende Verschiebungsvektoren (16) zuordnet.

3. Verfahren nach Anspruch 2,
**dadurch gekennzeichnet,**
**dass** die paarweise Verarbeitung der Einzel-Bilder des ersten und des zweiten Zeitfensters (T1, T2) als eine bildzellenweise, zweidimensionale Kreuzkorrelation der jeweiligen Bilder erfolgt.

4. Verfahren nach einem der Ansprüche 2 bis 3,
**dadurch gekennzeichnet,**
**dass** zur Erzeugung eines Dehnungsfeldes, welches den Bereichen des Messobjektes spannungsinduzierte Dehnungen dieser Bereiche repräsentierende Dehnungsgrößen zuordnet, Differenzen benachbarter Verschiebungsgrößen (22) und/oder aus solchen Differenzen abgeleitete Größen berechnet wird.

5. Verfahren nach Anspruch 1,
**dadurch gekennzeichnet,**
**dass** das Verformungsfeld ein Dehnungsfeld ist, welches den Bereichen des Messobjektes spannungsinduzierte Dehnungen dieser Bereiche repräsentierende Dehnungsgrößen (16) zuordnet.

6. Verfahren nach einem der vorangehenden Ansprüche
**dadurch gekennzeichnet,**
**dass** die optischen Versetzungen des Bilddetektors zwischen den Aufnahmen der Einzel-Bilder eines Zeitfensters (T1; T2) modulo einer Pixelausdehnung gleichverteilt über eine Pixelfläche erfolgen.

7. Verfahren nach einem der vorangehenden Ansprüche
**dadurch gekennzeichnet,**
**dass** die optische Versetzung des Bilddetektors zwischen den Aufnahmen zweier Einzel-Bilder mittels elektromechanischer und/oder piezoelektrischer Aktuatoren erfolgt.

8. Verfahren nach einem der Ansprüche 1 bis 6,
**dadurch gekennzeichnet,**
**dass** die optische Versetzung des Bilddetektors zwischen den Aufnahmen zweier Einzel-Bilder durch Variation eines optischen Mediums zwischen dem Bilddetektor und dem Messobjekt erfolgt.

9. Verfahren nach einem der vorangehenden Ansprüche,
**dadurch gekennzeichnet,**
**dass** zur Ermittlung des Ergebnis-Verformungsfeldes (20) aus den Einzel-Verformungsfeldern (18) eine Regression (24) durch ein Histogramm ermittelt wird, welches die einem Bereich des Messobjektes zugeordneten Verformungsgrößen (16) der Einzel-Verformungsfelder über der Zeit der Aufnahme der Einzel-Bilder eines Zeitfensters (T1; T2) repräsentiert.

10. Verfahren nach einem der vorangehenden Ansprüche
**dadurch gekennzeichnet,**
**dass** zur Bestimmung dreidimensionaler Verformungsfelder wenigstens zwei räumlich zueinander versetzte Bilddetektoren verwendet werden.

**Claims**

1. Method for the contact-free measurement of deformations of a surface of an object wherein, using an image detector composed of a plurality of arranged pixels, in a first time window (T1) where a first mechanical stress is applied to the object, at least one first image of the object is captured, and in a second time window (T2) where a second mechanical stress is applied to the object, at least one second image of the object is captured, and the captured images are processed together by a data processing unit to produce a deformation field (18; 20) which assigns to areas of the object deformation values representing stress-induced deformations,
**characterized in that**

- a plurality of individual images are captured in temporal sequence in each of the time windows (T1; T2), wherein between every two individual image captures the image detector is offset relative to the object and parallel to its detector surface by an optical offset of a size ranging from a fraction of a pixel up to a few pixels,
- the individual images of the first time window (T1) are processed pairwise with the individual images of the second time window (T2) to produce a set of individual deformation fields (18) and
- an average of the individual deformation fields (18) is calculated to yield an output deformation field (20).

2. Method according to Claim 1,
wherein the deformation field is a displacement vector field which assigns to the areas of the object displacement vectors (16) representing stress-induced translations of these areas.

3. Method according to Claim 2,
wherein the pairwise processing of the individual images of the first and of the second time window (T1, T2) is effected as an image-cell-based, two-dimensional cross-correlation of the respective images.

4. Method according to one of the Claims 2 to 3,
wherein, to generate a strain field which assigns to the areas of the object strain values representing stress-induced strain of these areas, differences between neighbouring displacement values (22) and/or quantities derived from such differences are calculated.

5. Method according to Claim 1,
wherein the deformation field is a strain field which assigns to the areas of the object strain values (16) representing stress-induced strain of these areas.

6. Method according to any one of the preceding Claims,

wherein the optical offsets of the image detector between the captures of the individual images of a time window (T1; T2) occur modulo a pixel expansion and uniformly distributed over a pixel surface.

**7.** Method according to any one of the preceding Claims,
wherein the optical offset of the image detector between the captures of two individual images is done using electromechanical and/or piezoelectric actuators.

**8.** Method according to any one of the Claims 1 to 6,
wherein the optical offset of the image detector between the captures of two individual images occurs through variation of an optical medium between the image detector and the object.

**9.** Method according to any one of the preceding Claims,
wherein, to determine the output deformation field (20) from the individual deformation fields (18) a regression (24) is calculated through a histogram which represents the deformation quantities (16) of the individual deformation fields assigned to an area of the object over the time of capture of the individual images of a time window (T1; T2).

**10.** Method according to any one of the preceding Claims,
wherein at least two image detectors spatially offset against each other are used to calculate three-dimensional deformation fields.

## Revendications

**1.** Procédé de mesure sans contact des déformations d'une surface d'un objet mesuré, dans lequel un détecteur d'image utilisant un grand nombre de pixels ordonnés est employé pour soumettre l'objet à une première contrainte mécanique et prendre au moins une première image de l'objet mesuré dans un premier créneau horaire (T1), puis pour soumettre l'objet à une deuxième contrainte mécanique et prendre au moins une deuxième image de l'objet mesuré dans un deuxième créneau horaire (T2), ces images prises en vue de la création d'un champ de déformation (18; 20), qui affecte aux zones de l'objet mesuré des valeurs de déformation représentatives des déformations induites par contrainte, étant ensuite exploitées conjointement par une unité de traitement des données, **caractérisé en ce que**

- dans chaque créneau horaire (T1; T2), plusieurs images individuelles sont prises successivement, et que pendant cette opération, le détecteur d'image est déplacé relativement à l'objet mesuré et parallèlement à la surface de détection dudit objet de sorte à obtenir un décalage optique allant de la taille d'une fraction de pixel à quelques pixels et ce, toutes les deux prises,
- les images individuelles prises lors du premier créneau horaire (T1) sont traitées par paire avec les images individuelles du deuxième créneau horaire (T2) afin de former un ensemble de champs de déformation individuels (18), et
- une moyenne des champs de déformation individuels (18) est calculée comme champ de déformation final (20).

**2.** Procédé selon la revendication 1, **caractérisé en ce que** le champ de déformation est un champ vectoriel de déplacement, qui affecte aux zones de l'objet mesuré des vecteurs de déplacement représentatifs des déplacements de ces zones induits par contrainte (16).

**3.** Procédé selon la revendication 2, **caractérisé en ce que** le traitement par paire des images individuelles prises dans le premier et le deuxième créneau horaire (T1, T2) est réalisé sous la forme d'une corrélation croisée, bidimensionnelle à l'échelle d'un pixel pour chaque image.

**4.** Procédé selon l'une des revendications 2 à 3, **caractérisé en ce que** des écarts entre des valeurs de déplacement voisines (22) et/ou des valeurs dérivées desdits écarts sont calculés en vue de la création d'un champ de dilatation, qui affecte aux zones de l'objet mesuré des valeurs de dilatation représentatives des dilatations de ces zones induites par contrainte.

**5.** Procédé selon la revendication 1, **caractérisé en ce que** le champ de déformation est un champ de dilatation, qui affecte aux zones de l'objet mesuré des valeurs de dilatation représentatives des dilatations de ces zones induites par contrainte (16).

6. Procédé selon une quelconque des revendications précédentes, **caractérisé en ce que** les déplacements optiques du détecteur d'image entre les prises des images individuelles dans un créneau horaire (T1; T2) sont uniformément répartis moyennant une extension des pixels sur une surface de pixel.

7. Procédé selon une quelconque des revendications précédentes, **caractérisé en ce que** le déplacement optique du détecteur d'image entre les prises de deux images individuelles est réalisé à l'aide d'actionneurs électromécaniques et/ou piézoélectriques.

8. Procédé selon l'une des revendications 1 à 6, **caractérisé en ce que** le déplacement optique du détecteur d'image entre les prises de deux images individuelles a lieu moyennant la variation d'un milieu optique entre le détecteur d'image et l'objet mesuré.

9. Procédé selon une quelconque des revendications précédentes, **caractérisé en ce qu'**en vue du calcul du champ de déformation final (20) à partir des champs de déformation individuels (18), une régression (24) est déterminée à l'aide d'un histogramme, qui représente les valeurs de déformation affectées à une zone de l'objet mesuré (16) pour chaque champ de déformation durant la prise des images individuelles dans un créneau horaire (T1; T2).

10. Procédé selon une quelconque des revendications précédentes, **caractérisé en ce qu'**au moins deux détecteurs d'image décalés l'un par rapport à l'autre dans la pièce sont utilisés pour déterminer des champs de déformation tridimensionnels.

**Fig. 1**

**Fig.2**

**Fig. 3**

**Fig. 4**

*Fig. 5*

**Fig. 6**

**Fig. 7**

**EP 2 158 445 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5726907 A
- DE 19614896 A1
- US 5065331 A